# FASCICULE DE BREVET EUROPEEN

(11) **EP 2 111 352 B1**
(45) Date de publication et mention de la délivrance du brevet: **07.04.2010**
(21) Numéro de dépôt: 08761907.8
(22) Date de dépôt: 08.01.2008
(51) Int. Cl.: B62D 25/20

(54) **STRUCTURE DE LA PARTIE ARRIERE D'UN VEHICULE AUTOMOBILE**
HECKSTRUKTUR FÜR EIN KRAFTFAHRZEUG
STRUCTURE OF THE REAR PART OF A MOTOR VEHICLE

(30) Priorité: 09.01.2007 FR 0700116
(43) Date de publication de la demande: 28.10.2009
(73) Titulaire: Renault SAS, 92100 Boulogne Billancourt (FR)
(72) Inventeur: ROUSSEAU, Olivier, F-91310 Linas (FR)
(86) Numéro de dépôt international: PCT/FR2008/050031
(87) Numéro de publication internationale: WO 2008/107580

(56) Documents cités:
- DE-A1- 10 061 639
- FR-A- 2 885 109
- US-A- 5 110 177

## Description

La présente invention concerne la structure de la partie arrière d'un véhicule automobile.

Dans de nombreux cas, la structure de la partie arrière d'un véhicule automobile comprend deux longerons en tôle emboutie s'étendant sous le plancher arrière c'est-à-dire sous la partie arrière de la plateforme du véhicule automobile.

Ces longerons sont emboutis de façon à présenter une section creuse et supportent l'essieu arrière du véhicule.

Dans certains types de véhicules notamment construits par la Demanderesse, le bord avant du plancher arrière est relié à une paroi en tôle appelée pare close s'étendant dans un plan sensiblement vertical et transversal par rapport aux deux longerons.

La paroi constituant la pare close est renforcée par une tôle soudée à la pare close appelée renfort de pare close.

Dans le cas des véhicules ci-dessus, l'extrémité avant de chaque longeron est fixée au renfort de pare close précité, grâce à une patte repliée formée sur le bord avant du longeron. Cette patte est obtenue par une opération de pliage qui est réalisée après l'opération d'emboutissage du longeron.

Pour réduire les coûts, les constructeurs proposent des véhicules présentant des longueurs différentes dont la plateforme présente une structure identique mais dont une partie, par exemple la partie arrière du plancher présente une longueur (dans la direction longitudinale du véhicule) variable.

Ainsi, dans le cas d'une version de base du véhicule, la partie arrière du plancher est plus courte que dans le cas d'une version allongée du véhicule offrant plus de place à l'arrière ou pouvant recevoir une troisième rangée de sièges.

Pour chaque longueur de la partie arrière du plancher, il y a lieu en conséquence d'adapter la longueur des longerons arrières.

Dans l'exemple ci-dessus, il faut donc pour chaque longueur, emboutir des longerons adaptés à cette longueur et compléter cet emboutissage par une opération de pliage pour créer la patte de fixation repliée précitée.

Le document FR-A-2 885 109 décrit une structure suivant les caractéristiques du préambule de le revendication 1.

Le but de l'invention est de supprimer cette opération de repliage pour réduire les coûts et faciliter l'adaptation de la longueur des longerons arrières.

Ce but est atteint grâce à une structure de la partie arrière d'un véhicule automobile, comprenant deux longerons en tôle emboutie s'étendant sous le plancher arrière du véhicule, l'extrémité avant de chaque longeron étant fixée à une tôle de renfort de la paroi en tôle constituant la pare close qui s'étend transversalement aux deux longerons, **caractérisée en ce que** l'extrémité avant de chaque longeron est fixée à une patte repliée vers l'arrière prévue sur un bord latéral de la tôle de renfort de la pare close.

Ainsi, la patte de fixation du longeron au renfort de pare close au lieu d'être formée sur l'extrémité de chaque longeron est réalisée sur chaque bord latéral de ce renfort de pare close.

L'opération de pliage d'une patte de fixation sur l'extrémité de chaque longeron est ainsi évitée, ce qui permet de réduire les coûts et facilite l'adaptation de la longueur des longerons à celle des différents planchers arrières des véhicules.

Selon une version préférée de l'invention chaque longeron comporte deux faces latérales parallèles, l'extrémité de la face latérale s'étendant en regard de l'autre longeron étant directement soudée à la patte du bord latéral de la tôle de renfort de la pare close.

De préférence également, l'extrémité de la face latérale du longeron adjacente à l'extérieur du véhicule est soudée à une paroi en tôle constituant un bavolet s'étendant parallèlement à ladite face latérale et perpendiculairement à la pare close, ce bavolet étant lui-même fixé à un bord latéral de la pare close.

Les deux faces latérales du longeron sont ainsi soudées chacune à un élément rigide de la structure du véhicule, ce qui permet d'obtenir une fixation très solide du longeron.

Dans une version avantageuse de l'invention, le renfort de pare close est une tôle s'étendant parallèlement à la tôle formant la pare close, chacun des bords latéraux de ce renfort de pare close comportant une partie repliée vers la pare close et soudée à celle-ci, ladite patte repliée vers l'arrière étant formée sur le bord de ladite partie repliée.

Cette disposition permet de créer une patte de fixation solidement fixée à la fois au renfort de pare close et à la pare close proprement dite.

D'autres particularités et avantages de l'invention apparaîtront encore tout au long de la description ci-après.

Aux dessins annexés, donnés à titre d'exemples, non limitatifs :
- la figure 1 est une vue de dessus schématique de la structure de la partie arrière selon l'invention d'un véhicule automobile, le plancher arrière de celui-ci ayant été enlevé,
- la figure 2 est une vue en coupe suivant le plan II-II de la figure 1.

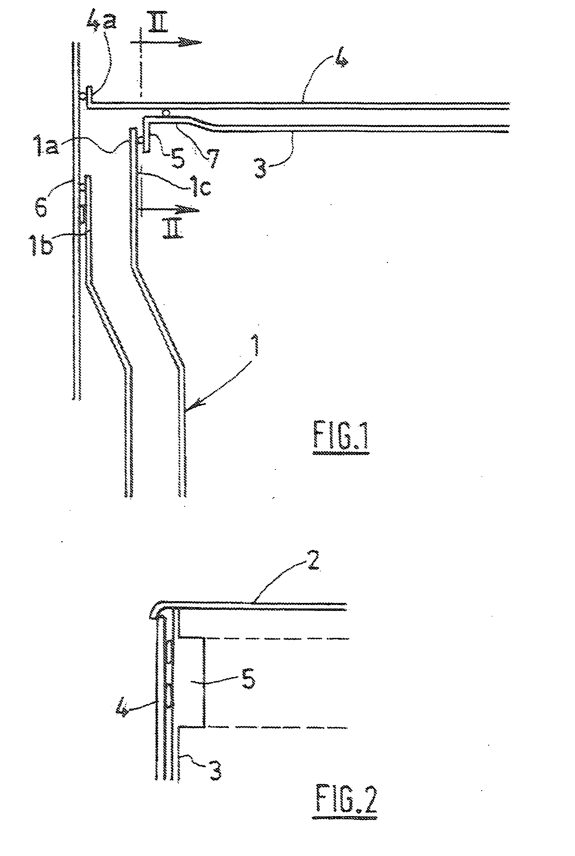

La figure 1 représente schématiquement la structure de la partie arrière gauche d'un véhicule automobile qui comprend un longeron 1 en tôle emboutie s'étendant sous le plancher arrière 2 (voir figure 2) du véhicule.

L'extrémité avant la du longeron 1 est fixée à une tôle de renfort 3 de la paroi en tôle 4 constituant la pare close qui s'étend transversalement au longeron 1.

Conformément à l'invention, l'extrémité avant la de chaque longeron 1 est fixée à une patte 5 repliée vers l'arrière prévue sur un bord latéral de la tôle de renfort 3 de la pare close 4.

Dans l'exemple représenté, chaque longeron 1 comporte deux faces latérales parallèles 1b, 1c, l'extrémité de la face latérale 1c s'étendant en regard de l'autre longeron (non représenté) étant directement soudée à la patte 5 du bord latéral de la tôle de renfort 3 de la pare close.

La figure 1 montre également l'extrémité de la face latérale 1b du longeron 1 adjacente à l'extérieur du véhicule est soudée à une paroi en tôle 6 constituant un bavolet s'étendant parallèlement à cette face latérale 1b et perpendiculairement à la pare close 4. Ce bavolet 6 est lui-même fixé à un bord latéral 4a de la pare close 4.

Dans l'exemple représenté, le renfort de pare close 3 est une tôle s'étendant parallèlement à la tôle formant la pare close 4.

Chacun des bords latéraux de ce renfort de pare close 3 comporte une partie 7 repliée vers la pare close 4 et soudée à celle-ci. La patte 5 repliée vers l'arrière est formée sur le bord de ladite partie 7 repliée.

La réalisation que l'on vient de décrire présente les principaux avantages suivants.

La fabrication du longeron 1 est plus simple et moins coûteuse que dans le cas de la réalisation actuelle puisqu'il ne comporte pas de patte de fixation nécessitant une opération de pliage à la suite de l'emboutissage.

De ce fait, la longueur du longeron 1 peut être ajustée plus facilement à celle du plancher arrière 2.

La patte repliée 5 du renfort de pare close 3 permet d'obtenir une liaison rigide et solide du longeron 1 avec l'ensemble rigide constitué par le renfort de pare close 3, la pare close 4 et le bavolet 6 auquel l'extrémité du longeron 1 est également fixée.

## Revendications

1. Structure de la partie arrière d'un véhicule automobile, comprenant deux longerons (1) en tôle emboutie s'étendant sous le plancher arrière du véhicule, l'extrémité avant (1a) de chaque longeron étant fixée à une tôle de renfort (3) de la paroi en tôle constituant la pare close (4) qui s'étend transversalement aux deux longerons (1), **caractérisée en ce que** l'extrémité avant (1a) de chaque longeron (1) est fixée à une patte (5) repliée vers l'arrière prévue sur un bord latéral de la tôle de renfort (3) de la pare close (4).

2. Structure selon la revendication 1, **caractérisée en ce que** chaque longeron (1) comporte deux faces latérales parallèles (1b, 1c), l'extrémité de la face latérale (1c) s'étendant en regard de l'autre longeron étant directement soudée à la patte (5) du bord latéral de la tôle de renfort (3) de la pare close.

3. Structure selon la revendication 2, **caractérisée en ce que** l'extrémité de la face latérale (1b) du longeron (1) adjacente à l'extérieur du véhicule est soudée à une paroi en tôle (6) constituant un bavolet s'étendant parallèlement à ladite face latérale (1b) et perpendiculairement à la pare close (4), ce bavolet (6) étant lui-même fixé à un bord latéral de la pare close (4).

4. Structure selon l'une des revendications 1 à 3, **caractérisée en ce que** le renfort de pare close (3) est une tôle s'étendant parallèlement à la tôle (4) formant la pare close, chacun des bords latéraux de ce renfort de pare close (3) comportant une partie (7) repliée vers la pare close (4) et soudée à celle-ci, ladite patte (5) repliée vers l'arrière étant formée sur le bord de ladite partie repliée (7).

## Claims

1. Structure of the rear part of a motor vehicle, comprising two longitudinal members (1) made of pressed sheet and extending below the rear floor of the vehicle, the front end (1a) of each longitudinal member being fastened to a reinforcing sheet (3) of the sheet wall constituting the heel board (4) which extends transversally to the two longitudinal members (1), **characterized in that** the front end (1a) of each longitudinal member (1) is fastened to a rearwardly folded tab (5) provided on a lateral edge of the reinforcing sheet (3) of the heel board (4).

2. Structure according to Claim 1, **characterized in that** each longitudinal member (1) comprises two parallel lateral faces (1b, 1c), the end of the lateral face (1c) extending opposite the other longitudinal member being directly welded to the tab (5) of the lateral edge of the reinforcing sheet (3) of the heel board.

3. Structure according to Claim 2, **characterized in that** the end of the lateral face (1b) of the longitudinal member (1) adjacent to the outside of the vehicle is welded to a sheet wall (6) constituting a valance extending parallel to the said lateral face (1b) and perpendicularly to the heel board (4), this valance (6) being fastened to a lateral edge of the heel board (4).

4. Structure according to one of Clams 1 to 3,
**characterized in that** the heel board reinforcement (3) is a sheet extending parallel to the sheet (4) forming the heel board, each of the lateral edges of this heel board reinforcement (3) comprising a part (7) folded towards the heel board (4) and welded to it, the said rearwardly folded tab (5) being formed on the edge of the said folded part (7).

## Patentansprüche

1. Heckstruktur für ein Kraftfahrzeug, mit zwei Längsträgern (1) aus Pressbleich, die sich unter dem Fondboden des Fahrzeugs erstrecken, wobei das Vorderende (1a) jedes Längsträgers an einem Verstärkungsblech (3) der die sich quer zu den beiden Längsträgern (1) erstreckenden Deckleiste (4) bildenden Blechwand befestigt ist, **dadurch gekennzeichnet, dass** das Vorderende (1a) jedes Längsträgers (1) an einem nach hinten umgebogenen Ansatz (5) befestigt ist, der an einem Seitenrand des Verstärkungsblechs (3) der Deckleiste (4) vorgesehen ist.

2. Struktur nach Anspruch 1, **dadurch gekennzeichnet, dass** jeder Längsträger (1) zwei parallele Seitenflächen (1b, 1c) umfasst, wobei das Ende der sich gegenüber dem anderen Längsträger erstreckenden Seitenfläche (1c) mit dem Ansatz (5) des Seitenrands des Verstärkungsblechs (3) der Deckleiste direkt verschweißt ist.

3. Struktur nach Anspruch 2, **dadurch gekennzeichnet, dass** das Ende der Seitenfläche (1b) des Längsträgers (1) neben der Außenseite des Fahrzeugs mit einer Blechwand (6) verschweißt ist, die einen Lappen bildet, der sich parallel zur Seitenfläche (1b) und senkrecht zur Deckleiste (4) erstreckt, wobei dieser Lappen (6) wiederum an einem Seitenrand der Deckleiste (4) befestigt ist.

4. Struktur nach einem der Ansprüche 1 bis 3, **dadurch gekennzeichnet, dass** die Deckleistenverstärkung (3) ein Blech ist, das sich parallel zu dem die Deckleiste bildenden Blech (4) erstreckt, wobei jeder der Seitenränder dieser Deckleistenverstärkung (3) einen zur Deckleiste (4) umgebogenen mit ihr verschweißten Teil (7) aufweist, wobei der nach hinten umgebogene Ansatz (5) an dem Rand des umgebogenen Teils (7) ausgebildet ist.
